# EUROPÄISCHE PATENTSCHRIFT

(11) **EP 1 619 045 B1**
(45) Veröffentlichungstag und Bekanntmachung des Hinweises auf die Patenterteilung: **16.06.2010**
(21) Anmeldenummer: 05014820.4
(22) Anmeldetag: 08.07.2005
(51) Int. Cl.: B60B 27/00, B60B 3/16

(54) **Radbolzen zur Befestigung von Fahrzeugrädern**
Wheel lugs for fixation of vehicle wheels
Ecrou de roue pour fixation de roues de véhicules

(30) Priorität: 22.07.2004 DE 102004035689
(43) Veröffentlichungstag der Anmeldung: 25.01.2006
(73) Patentinhaber: BPW Bergische Achsen KG, 51674 Wiehl (DE)
(72) Erfinder: Köchl, Hans-Ulrich, 51674 Wiehl (DE); Mollerus, Bernd, 51674 Wiehl (DE)
(74) Vertreter: Christophersen & Partner

(56) Entgegenhaltungen:
- EP-A- 1 162 385
- DE-C1- 4 318 494
- US-A1- 2003 121 153

## Beschreibung

Die Erfindung betrifft einen Radbolzen zur Befestigung eines Fahrzeugrades an einem über seinem Umfang mit Radbolzenaufnahmen versehenen Radträger, bestehend aus einem radial erweiterten Kopf und einem sich anschließenden, zugleich einen Bremskörper, den Radträger und das Fahrzeugrad durchdringenden Schaft, der einen Gewindeabschnitt und einen mit mindestens einer Wendelnut versehenen Zentrierabschnitt umfaßt.

Derartige Radbolzen dienen zur Befestigung des Fahrzeugrades an dem jeweiligen Radträger. Dieser Radträger ist in den meisten Fällen die Radnabe, jedoch kann die Befestigung des Fahrzeugrades auch z. B. an einer Bremstrommel erfolgen, die ihrerseits wiederum an der Radnabe befestigt ist. Die Befestigung des Fahrzeugrades erfolgt über eine auf den Gewindeabschnitt des Radbolzens aufgeschraubte Radmutter, die sich von außen her an dem Fahrzeugrad abstützt, wohingegen die Reaktionskraft durch den radial erweiterten Kopf des Radbolzens aufgenommen wird, mit dem sich der Radbolzen von innen her gegen den Bremskörper oder den Radträger abstützt.

Die Zentrierung des Radbolzens erfolgt über einen an seinem Schaft ausgebildeten Zentrierabschnitt, der in der Radbolzenaufnahme, meist einer Durchgangsbohrung des Radträgers, liegt. Aus diesem Grund werden sowohl der Zentrierabschnitt, wie auch die diesen umgebende Durchgangsbohrung des Radträgers als Passungen ausgebildet, die einen sicheren und spielfreien Sitz des Radbolzens sicherstellen. Die Herstellung solcher Passungen erfordert allerdings eine hohe Fertigungsgenauigkeit der beteiligten Passungsflächen. Dies ist aber vor allem im Falle des Radbolzens, der üblicherweise in einem Walzverfahren hergestellt wird, problematisch, weshalb geringere Anforderungen an die Maßhaltigkeit des Radbolzens wünschenswert sind. Es hat sich gezeigt, daß mit einer Reduzierung der sich gegenüberliegenden Kontaktflächen geringere Anforderungen an die Fertigungstoleranzen verbunden sind, als bei einem glatten zylindrischen Zentrierabschnitt, bei dem die gesamte Mantelfläche des Zentrierabschnitts als Kontaktfläche dient.

Aus der EP 1 162 385 A2 ist es bekannt, den Radbolzen im Bereich seines den Radträger durchdringenden Zentrierabschnitts mit gleichmäßig über den Umfang verteilten Längsnuten in Form axialer Rändelungen zu versehen. Bei diesen Rändelungen hat es sich als nachteilig erwiesen, daß sich diese infolge ihrer Scharfkantigkeit in die Durchgangsbohrungen des Radträgers eingraben, wodurch die Bohrung abgenutzt bzw. beschädigt wird. Der Radbolzen sitzt dann im Bereich des eigentlichen Zentrierabschnitts nur noch lose, also weder zentriert noch zuverlässig gegen Verdrehen und Herausfallen gesichert, in der Durchgangsbohrung des Radträgers. Daher ist es nicht auszuschließen, daß er beim Radwechsel aus der Bohrung nach hinten heraus geschoben wird.

Die DE 43 18 494 C1 zeigt einen ähnlichen Radbolzen.

Darüber hinaus ist aus der Praxis eine Konstruktion bekannt, bei welcher in den runden Zentrierabschnitt eine oder mehrere Nuten eingearbeitet sind, welche die Gestalt einer Wendel aufweisen. Ein mit einem solchen Zentrierabschnitt versehener Radbolzen ist aufgrund seiner Wendelgeometrie aber nur unzureichend gegen Verdrehen gesichert, weshalb sein Kopf eine einen zusätzlichen Aufwand erfordernde asymmetrische Form aufweist und erst dann als Verdrehsicherung geeignet ist.

Ausgehend von letzterem Stand der Technik liegt der Erfindung nun die **Aufgabe** zugrunde, einen Radbolzen mit den eingangs genannten Merkmalen auf konstruktiv einfache und zuverlässige Art und Weise gegen Verdrehungen zu sichern und hierbei eine zu starke Abnutzung der Bohrung des Radträgers zu vermeiden.

Zur **Lösung** dieser Aufgabe wird bei einem Radbolzen mit den eingangs genannten Merkmalen vorgeschlagen, daß der Schaft zwischen Kopf und Gewindeabschnitt einen Sicherungsabschnitt mit einer Oberflächenstruktur aufweist, welche durch das Einbringen des Radbolzens in den Bremskörper mit diesem einen Formschluß gegen Verdrehen bildet.

Mit Hilfe dieser Konstruktion wird eine zuverlässige Verdrehsicherung des mit einem wendelartig genuteten Zentrierbereich versehenen Radbolzens mit konstruktiv einfachen und kostengünstigen Mitteln erreicht, die nahezu spielfrei sind. Eine starke Abnutzung bzw. Beschädigung der Durchgangsbohrung des Radträgers wird vermieden.

In vorteilhafter Ausgestaltung des Erfindungsgedankens wird vorgeschlagen, daß der Zentrierabschnitt im Bereich der Radbolzenaufnahme des Radträgers angeordnet und ferner die Länge des Zentrierabschnitts im wesentlichen gleich der Dicke des Radträgers ist. Auf diese Weise ist eine sichere Zentrierung des Radbolzens in der Radbolzenaufnahme des Radträgers gewährleistet.

Darüber hinaus ist es vorteilhaft, daß der Außendurchmesser des Zentrierabschnitts mindestens gleich dem Innendurchmesser der Radbolzenaufnahme des Radträgers ist, da hierdurch ein sicherer und spielfreier Sitz des Radbolzens innerhalb der Radbolzenaufnahme gewährleistet ist. Der Sitz des Radbolzens kann durch ein leichtes Übermaß des Außendurchmessers des Zentrierabschnitts, der dann in die Radbolzenaufnahme des Radträgers eingepreßt ist, gegen Herausziehen bzw. -drücken gesichert sein.

Gemäß einer besonders vorteilhaften Ausgestaltung der Erfindung ist der vorzugsweise mit Längsrillen versehene Sicherungsabschnitt im Bereich der Durchgangsbohrung des Bremskörpers angeordnet. Wegen der scharfkantigen Längsnuten treten zwar Beschädigungen der ihn umgebenden Bohrung bereits durch das Einpressen des Radbolzens auf. Diese Beschädigungen sind aber von untergeordneter Bedeutung, da sie zum einen innerhalb einer Bohrung des Bremskörpers, die nicht der Zentrierung des Radbolzens dient, auftreten und darüber hinaus derartige Beschädigungen aufgrund der ohnehin nach einer gewissen Betriebszeit auszuwechselnden Bremskörper, wie etwa Bremstrommeln oder Bremsscheiben, mit jedem Wechsel des Bremskörpers behoben werden. Die Beschädigungen werden daher auch über längere Zeiträume betrachtet kein Ausmaß annehmen, welches zu Beeinträchtigungen der Befestigung des Fahrzeugrades führt. Die durch den mit Längsrillen oder ähnlichen Oberflächenstrukturen versehenen Abschnitt erreichte Verdrehsicherung bleibt daher zuverlässig bestehen.

Darüber hinaus wird vorgeschlagen, daß die Länge des Sicherungsabschnitts im wesentlichen gleich der Dicke des Bremskörpers ist und daß der Außendurchmesser dieses weiteren Abschnitts mindestens gleich dem Innendurchmesser der Durchgangsbohrung des Bremskörpers ist. Wird der Außendurchmesser des weiteren Abschnitts gegenüber dem Innendurchmesser der Durchgangsbohrung des Bremskörpers leicht überdimensioniert, so ist dies der Sicherheit des Sitzes des Radbolzens innerhalb der Durchgangsbohrung des Bremskörpers zuträglich. Es ist nicht ohne weiters möglich, den Radbolzen zu verdrehen oder ihn in dessen Längsrichtung aus der Bohrung heraus zu schieben.

Ebenfalls von Vorteil ist es, daß der Zentrierabschnitt und der weitere Abschnitt mit einem gegenüber dem übrigen Schaft vergrößerten Durchmesser versehen sind, und daß der Durchmesser des näher an dem Kopf angeordneten Abschnitts größer ist als der des weiter entfernt liegenden Abschnitts. Auf diese Weise läßt sich der Radbolzen stets von hinten, also von der Fahrzeugseite her, nach außen durch den Bremskörper, den Radträger und das Fahrzeugrad hindurch führen.

Des weiteren wird vorgeschlagen, daß das Verhältnis der genuteten zu den nicht-genuteten Anteilen der Mantelfläche in den Abschnitten kleiner als 1 ist, wodurch sich vergleichsweise geringe Anforderungen an die Fertigungstoleranzen ergeben, die mit herkömmlichen Walzverfahren erreichbar sind. Des weiteren werden mit Hilfe dieser Ausgestaltung axiale Kerbspannungen in den genuteten Abschnitten des Radbolzens gering gehalten.

Eine bevorzugte Ausgestaltung des erfindungsgemäßen Radbolzens ist dadurch gekennzeichnet, daß die Wendelnut als eine mehrgängige Wendel ausgebildet ist.

Weitere Vorteile und Einzelheiten der Erfindung werden nachfolgend unter Bezugnahme auf ein in der Zeichnung dargestelltes Ausführungsbeispiel erläutert. Auf der Zeichnung zeigt:
- Fig. 1: einen Teilschnitt durch die Befestigung eines Fahrzeugrades an einem von einem Achsschenkel aufgenommenen Radträger und
- Fig. 2: einen für die Radbefestigung nach Fig. 1 verwendeten Radbolzen in einer vergrößerten Einzelansicht.

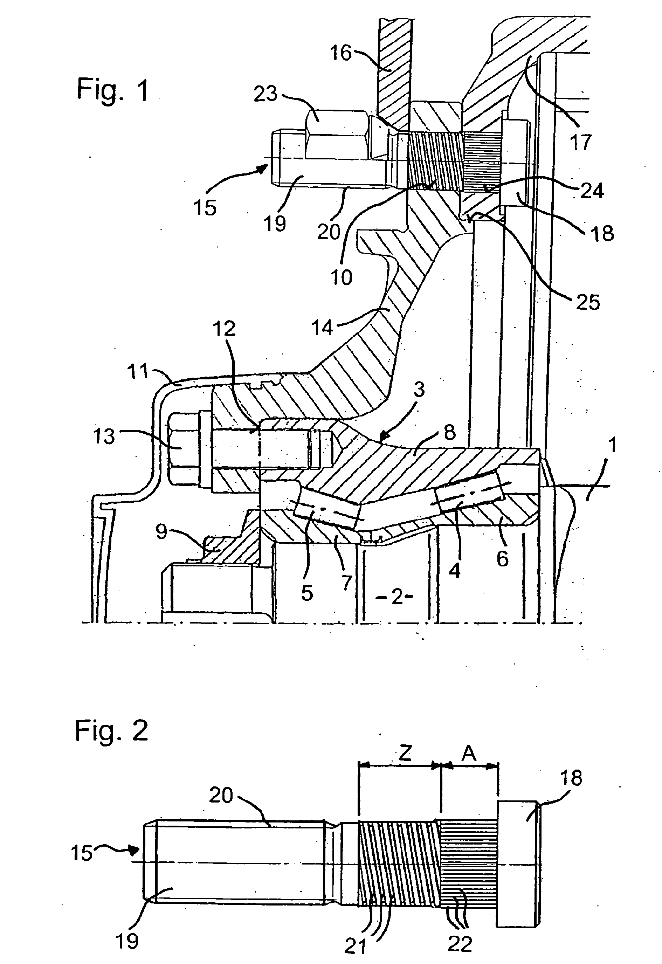

Die in Figur 1 im Schnitt dargestellte Radlagerung findet vor allem bei schweren Anhängerachsen Anwendung. Am Ende des Achskörpers 1 der Fahrzeugachse ist ein Achsschenkel 2 befestigt oder angeformt, auf dem eine Lagereinheit 3 sitzt. Bei dem Ausführungsbeispiel ist die Lagereinheit 3 ein Kompakt-Wälzlager mit inneren Wälzkörpern 4 und äußeren Wälzkörpern 5. Der Achsschenkel 2 nimmt die inneren Lagerringe 6, 7 auf, in denen die Wälzbahnen für die Wälzkörper 4, 5 ausgebildet sind. Der äußere Lagerring ist zugleich der Nabengrundkörper 8 der Radlagerung. Zu diesem Zweck sind an der Innenseite des Nabengrundkörpers 8 die Wälzbahnen für den Wälzkörper 4, 5 unmittelbar angeformt.

Am äußeren Ende des Achsschenkels ist zur Abstützung der inneren Lagerringe 6, 7 eine Achsmutter 9 angeordnet und in bekannter Weise gegen unbeabsichtigtes Lösen gesichert. Eine Radkapsel 11 verhindert das Eintreten von Schmutz in die Radlagerung.

An einer nach außen weisenden Stirnfläche 12 des Nabengrundkörpers 8 ist über mehrere Schrauben 13 ein als Nabenflansch 14 ausgebildeter Radträger lösbar befestigt. Nahe seines Außenumfangs ist der Nabenflansch 14 mit einer Mehrzahl gleichmäßig über den Umfang verteilter Durchgangsbohrungen 10 versehen, die als Radbolzenaufnahmen dienen und durch die die erfindungsgemäßen Radbolzen 15 stramm hindurch gesetzt sind. Mittels der Radbolzen 15 wird an der Außenseite des Nabenflansches 14 das Rad 16 bzw. die Radfelge befestigt. Zugleich übernehmen die Radbolzen 15 auch die Befestigung des Bremskörpers 17, der bei dem Ausführungsbeispiel gemäß Fig. 1 eine Bremstrommel ist, jedoch auch eine Bremsscheibe sein kann. Insgesamt durchdringt der Radbolzen 15 die Durchgangsbohrung 10 des Nabenflansches 14, eine Durchgangsbohrung 24 der Bremstrommel 17 sowie schließlich das Fahrzeugrad 16, d.h. die Felge. Zur Veranschaulichung sind das Fahrzeugrad 16 und die Radmutter 23 im Bereich des Radbolzens 15 nur teilweise dargestellt.

Neben der in Fig. 1 dargestellten Anordnung von Fahrzeugrad 16, Radträger 14 und Bremstrommel 17 ist es natürlich auch möglich, sowohl das Fahrzeugrad 16 sowie auch die Bremstrommel 17 auf der Außenseite des Radträgers 14 anzuordnen.

Wie Fig. 2 am besten erkennen läßt, besteht der Radbolzen 15 aus einem Schaft 19 und einem nach Art einer radialen Erweiterung ausgebildeten Kopf 18. Der Schaft 19 unterteilt sich in drei Abschnitte, wobei der dem Kopf 18 gegenüberliegende Gewindeabschnitt 20 stets am Ende des Radbolzens 15 angeordnet ist und zur Aufnahme der Radmutter 23 dient. Der Zentrierabschnitt Z und der weitere Sicherungsabschnitt A sind zwischen dem Kopf 18 und dem Gewindeabschnitt 20 angeordnet, wobei sich der Zentrierabschnitt Z stets innerhalb der als Radbolzenaufnahme dienenden Durchgangsbohrung 10 des Radträgers 10 befindet, und der Sicherungsabschnitt A sich innerhalb einer Bohrung 24 der Bremstrommel bzw. des Bremskörpers 17 befindet.

In Abhängigkeit davon, ob das Fahrzeugrad 16 und die Bremstrommel 17 auf der Außenseite des Radträgers 14 befestigt sind, oder ob sich der Radträger 14 gemäß der in Fig. 1 dargestellten Ausführungsform zwischen Fahrzeugrad 16 und Bremstrommel 17 befindet, ist die Anordnung des Zentrierabschnitts Z und des weiteren Abschnitts A zwischen dem Kopf 18 und dem Gewindeabschnitt 20 variabel. Bei dem in Fig. 1 dargestellten Ausführungsbeispiel eines Radbolzens 15 ist der Abschnitt A am kopfseitigen Ende des Schafts 19 angeordnet, der Zentrierabschnitt Z schließt sich an. Die Positionen des Zentrierabschnitts Z und die des weiteren Abschnitts A auf dem Schaft 19 sind bei einem Radbolzen 15, der in einer Konstruktion mit an der Außenseite des Radträgers 14 befestigtem Fahrzeugrad 16 und außenseitig befestigter Bremstrommel 17 eingesetzt wird, vertauscht.

Der Schaft 19 des Radbolzens 15 durchdringt die Bremstrommel 17, den Radträger 14 und das Fahrzeugrad 16. Die Zentrierung des Radbolzens 15 erfolgt über den Zentrierabschnitt Z sowie eine Durchgangsbohrung 10 des Radträgers 14. Die Mantelfläche des Zentrierabschnitts Z ist mit Wendelnuten 21 versehen, wodurch die sich gegenüberliegenden Kontaktflächen verringert werden, so daß sich in diesem Abschnitt geringere Anforderungen an die Fertigungstoleranzen des in einem Walzverfahren hergestellten Radbolzen 15 ergeben. Der Zentrierabschnitt Z hat einen Außendurchmesser, der mindestens gleich dem Innendurchmesser der Durchgangsbohrung 10 des Radträgers 14 ist. Durch ein geringes Übermaß des Außendurchmessers läßt sich der Sitz des Radbolzens 15 in Radbolzenlängsrichtung gegen z.B. Herausfallen sichern.

Der weitere Abschnitt A ist mit in Radbolzenlängsrichtung verlaufenden Längsnuten 22 nach Art axialer Rändelungen versehen. Dieser Abschnitt A dient infolge seiner Oberflächenstruktur als Verdrehsicherung des Radbolzens 15, weshalb er vorzugsweise mit einem gewissen Außendurchmesserübermaß gegenüber der ihn umgebenden Bohrung 24 der Bremstrommel 17 versehen ist. Der Abschnitt A hat keine nennenswerte Zentrierfunktion, weder für den Radbolzen 15 noch für die Bremstrommel 17, die über eine umlaufende Sitzfläche 25 des Radträgers 14 zentriert wird. Es ist daher auch möglich, daß der Abschnitt A des Radbolzens 15 leicht exzentrisch innerhalb der Bohrung 24 der Bremstrommel 17 sitzt, wodurch an seiner einen Mantelflächenhälfte vergleichsweise große Preß- bzw. Reibkräfte auftreten können, die der Verdrehsicherung des Radbolzens 15 weiter zuträglich sind.

Durch diese Anordnung des als Verdrehsicherung dienenden, mit einer Oberflächenstruktur in Gestalt von Längsnuten 22 versehenen Abschnitts A in einer Bohrung 24 der Bremstrommel 17 kommt es allenfalls zu Beschädigungen der Bohrung 24, die aber keine Zentrierfunktion hat. Da die Bremstrommeln 17 einem Verschleiß unterliegen und ohnehin nach einer bestimmten Laufleistung gewechselt werden müssen, übersteigen die Beschädigungen der Bohrung 24 keine kritischen Werte. Die der Zentrierung des Radbolzens 15 dienende Durchgangsbohrung 10 bleibt davon unabhängig frei von Beschädigungen.

### Bezugszeichenliste

- 1: Achskörper
- 2: Achsschenkel
- 3: Lagereinheit
- 4: innere Wälzkörper
- 5: äußere Wälzkörper
- 6: Lagerring
- 7: Lagerring
- 8: Nabengrundkörper
- 9: Achsmutter
- 10: Durchgangsbohrung, Radbolzenaufnahme
- 11: Radkapsel, Abdeckung
- 12: Stirnfläche der Nabe
- 13: Schraube
- 14: Nabenflansch, Radträger
- 15: Radbolzen
- 16: Fahrzeugrad, Felge
- 17: Bremskörper
- 18: Kopf
- 19: Schaft
- 20: Gewindeabschnitt
- 21: Wendelnut
- 22: Längsnut
- 23: Radmutter
- 24: Durchgangsbohrung
- 25: Sitzfläche des Radträgers

- Z: Zentrierabschnitt mit Wendelnut
- A: Sicherungsabschnitt

## Patentansprüche

1. Radbolzen zur Befestigung eines Fahrzeugrades an einem über seinem Umfang mit Radbolzenaufnahmen versehenen Radträger, bestehend aus einem radial erweiterten Kopf (18) und einem sich anschließenden, zugleich einen Bremskörper (17), den Radträger (14) und das Fahrzeugrad (16) durchdringenden Schaft (19), der einen Gewindeabschnitt (20) und einen mit mindestens einer Wendelnut (21) versehenen Zentrierabschnitt (Z) umfaßt,
**dadurch gekennzeichnet,**
**daß** der Schaft (19) zwischen Kopf (18) und Gewindeabschnitt (20) einen Sicherungsabschnitt (A) mit einer Oberflächenstruktur aufweist, welche durch das Einbringen des Radbolzens (15) in den Bremskörper (17) mit diesem einen Formschluß gegen Verdrehen bildet.

2. Radbolzen nach Anspruch 1, **dadurch gekennzeichnet, daß** der Sicherungsabschnitt (A) ein mit Längsnuten (22) versehener Abschnitt ist.

3. Radbolzen nach Anspruch 1 oder Anspruch 2, **dadurch gekennzeichnet, daß** der Zentrierabschnitt (Z) im Bereich der Radbolzenaufnahme (10) des Radträgers (14) angeordnet ist.

4. Radbolzen nach einem der Ansprüche 1 bis 3, **dadurch gekennzeichnet, daß** die Länge des Zentrierabschnitts (Z) im wesentlichen gleich der Dicke des Radträgers (14) ist.

5. Radbolzen nach einem der Ansprüche 1 bis 4, **dadurch gekennzeichnet, daß** der Außendurchmesser des Zentrierabschnitts (Z) mindestens gleich dem Innendurchmesser der Radbolzenaufnahme (10) des Radträgers (14) ist.

6. Radbolzen nach Anspruch 1, **dadurch gekennzeichnet, daß** der Sicherungsabschnitt (A) im Bereich der Durchgangsbohrung (24) des Bremskörpers (17) angeordnet ist.

7. Radbolzen nach Anspruch 1 und/oder Anspruch 6, **dadurch gekennzeichnet, daß** die Länge des Sicherungsabschnitts (A) im wesentlichen gleich der Dicke des Bremskörpers (17) ist.

8. Radbolzen nach einem der Ansprüche 6 und/oder 7, **dadurch gekennzeichnet, daß** der Außendurchmesser des Sicherungsabschnitts (A) mindestens gleich dem Innendurchmesser der Durchgangsbohrung (24) des Bremskörpers (17) ist.

9. Radbolzen nach einem der vorhergehenden Ansprüche, **dadurch gekennzeichnet, daß** der Zentrierabschnitt (Z) und der Sicherungsabschnitt (A) mit einem gegenüber dem übrigen Schaft (19) größeren Durchmesser versehen sind.

10. Radbolzen nach einem der vorhergehenden Ansprüche, **dadurch gekennzeichnet, daß** der Durchmesser des näher an dem Kopf (18) angeordneten Abschnittes (Z, A) größer ist als der des weiter entfernt liegenden Abschnitts (Z, A).

11. Radbolzen nach einem der vorhergehenden Ansprüche, **dadurch gekennzeichnet, daß** das Verhältnis der genuteten zu den nicht-genuteten Anteilen der Mantelfläche in den Abschnitten (Z, A) kleiner als 1 ist.

12. Radbolzen nach einem der vorhergehenden Ansprüche, **dadurch gekennzeichnet, daß** die Wendelnut (21) als eine mehrgängige Wendel ausgebildet ist.

## Claims

1. Wheel bolt for attaching a vehicle wheel to a wheel carrier provided with wheel bolt openings around its circumference, said wheel bolt consisting of a radially widened head (18) and of an adjoining shaft (19) which simultaneously passes through a brake body (17), the wheel carrier (14) and the vehicle wheel (16) and which comprises a threaded section (20) and a centring section (Z) provided with at least one helical groove (21), **characterised in that** the shaft (19) has between the head (18) and the threaded section (20) a securing section (A) with a surface structure which, as a result of the wheel bolt (15) being introduced into the brake body (17), establishes a form fit with the latter to prevent rotation.

2. Wheel bolt according to claim 1, **characterised in that** the securing section (A) is a section provided with longitudinal grooves (22).

3. Wheel bolt according to claim 1 or claim 2, **characterised in that** the centring section (Z) is arranged in the region of the wheel bolt opening (10) of the wheel carrier (14).

4. Wheel bolt according to one of claims 1 to 3, **characterised in that** the length of the centring section (Z) is substantially equal to the thickness of the wheel carrier (14).

5. Wheel bolt according to one of claims 1 to 4, **characterised in that** the external diameter of the centring section (Z) is at least equal to the internal diameter of the wheel bolt opening (10) of the wheel carrier (14).

6. Wheel bolt according to claim 1, **characterised in that** the securing section (A) is arranged in the region of the through-hole (24) of the brake body (17).

7. Wheel bolt according to claim 1 and/or claim 6, **characterised in that** the length of the securing section (A) is substantially equal to the thickness of the brake body (17).

8. Wheel bolt according to one of claims 6 and/or 7, **characterised in that** the external diameter of the securing section (A) is at least equal to the internal diameter of the through-hole (24) of the brake body (17).

9. Wheel bolt according to one of the preceding claims, **characterised in that** the centring section (Z) and the securing section (A) are provided with a diameter larger than the rest of the shaft (19).

10. Wheel bolt according to one of the preceding claims, **characterised in that** the diameter of the section (Z, A) arranged closer to the head (18) is larger than that of the section (Z, A) located further away therefrom.

11. Wheel bolt according to one of the preceding claims, **characterised in that** the ratio of the grooved to the non-grooved parts of the outer surface in the sections (Z, A) is less than 1.

12. Wheel bolt according to one of the preceding claims, **characterised in that** the helical groove (21) is configured as a multiple helix.

## Revendications

1. Boulon de roue pour la fixation d'une roue de véhicule sur un support de roue muni sur son pourtour d'un logement pour le boulon de roue, comportant une tête (18) élargie radialement et une tige (19) directement adjacente, qui traverse en même temps un corps de frein (17), le support de roue (14) et la roue (16) du véhicule et qui comporte une partie filetée (20) et une partie de centrage (Z) munie d'au moins une rainure hélicoïdale (21), **caractérisé en ce que** la tige (19) comporte, entre la tête (18) et la partie filetée (20), une partie de sécurité (A) avec une structure superficielle qui, sous l'effet de l'introduction du boulon de roue (15) dans le corps de frein (17), forme avec celui-ci un assemblage par conjugaison de forme empêchant toute rotation.

2. Boulon de roue selon la revendication 1, **caractérisé en ce que** la partie de sécurité (A) est une partie munie de rainures longitudinales (22).

3. Boulon de roue selon la revendication 1 ou 2, **caractérisé en ce que** la partie de centrage (Z) est disposée dans la zone du logement pour boulon (10) du support de roue (14).

4. Boulon de roue selon l'une quelconque des revendications 1 à 3, **caractérisé en ce que** la longueur de la partie de centrage (Z) est sensiblement égale à l'épaisseur du support de roue (14).

5. Boulon de roue selon l'une quelconque des revendications 1 à 4, **caractérisé en ce que** le diamètre extérieur de la partie de centrage (Z) est au moins égal au diamètre intérieur du logement pour boulon (10) du support de roue (14).

6. Boulon de roue selon la revendication 1, **caractérisé en ce que** la partie de sécurité (A) est située dans la zone de la forure débouchante (24) du corps de frein (17).

7. Boulon de roue selon la revendication 1 et/ou la revendication 6, **caractérisé en ce que** la longueur de la partie de sécurité (A) est sensiblement égale à l'épaisseur du corps de frein (17).

8. Boulon de roue selon la revendication 6 et/ou la revendication 7, **caractérisé en ce que** le diamètre extérieur de la partie de sécurité (A) est au moins égal au diamètre intérieur de la forure débouchante (24) du corps de frein (17).

9. Boulon de roue selon l'une quelconque des revendications précédentes, **caractérisé en ce que** la partie de centrage (Z) et la partie de sécurité (A) ont un diamètre plus grand que celui du reste de la tige (19).

10. Boulon de roue selon l'une quelconque des revendications précédentes, **caractérisé en ce que** le diamètre de la partie (Z, A) disposée plus près de la tête (18) est plus grand que le diamètre de la partie (Z, A) davantage éloignée.

11. Boulon de roue selon l'une quelconque des revendications précédentes, **caractérisé en ce que** le rapport des parties rainurées par rapport aux parties non rainurées de la paroi latérale dans les parties (Z, A) est inférieur à 1.

12. Boulon de roue selon l'une quelconque des revendications précédentes, **caractérisé en ce que** la rainure hélicoïdale (21) est réalisée sous la forme d'une spire à plusieurs pas.
